# EUROPEAN PATENT APPLICATION

(11) **EP 4 506 422 A1**
(43) Date of publication of application: **12.02.2025**
(21) Application number: 23191147.0
(22) Date of filing: 11.08.2023
(51) Int. Cl.: C09D 5/33, C09D 193/04, C09J 193/04, E01F 9/506

(54) **ECO-EFFECTIVE ROAD MARKING COMPOSITION SUITABLE FOR THE BIOSPHERE**

(71) Applicant: Triflex GmbH & Co. KG, 32423 Minden (DE)
(72) Inventor: HALSTENBERG, Ivonne, 32423 Minden (DE); KASSEL, Bianca, 32423 Minden (DE); BRAUNGART, Michael, 20457 Hamburg (DE); MELLENTIN, Florian, 20457 Hamburg (DE); KÖHLER, Aurel, 20457 Hamburg (DE); SMOLKE, Jana, 20457 Hamburg (DE)
(74) Representative: König Szynka Tilmann von Renesse Patentanwälte Partnerschaft mbB Düsseldorf

(57) **Abstract**

The present invention pertains to thermoplastic road marking compositions comprising at least one biodegradable polymer and preferably bio-based components. The thermoplastic road marking composition comprises: a) at least one thermoplastic biodegradable polymer, preferably according to OECD 301B b) resin, and c) wax. The present invention has the advantage that microplastics introduced into the environment by abrasion from the thermoplastic road marking are not persistent but biodegradable.

## Description

The invention in general relates to thermoplastic road markings. In particular, thermoplastic road marking compositions and thermoplastic road markings comprising the thermoplastic composition, which preferably do not introduce persistent microplastic or toxic compounds into the biosphere.

Road markings are used to guide drivers and pedestrians. Thermoplastic markers are some of the most common types of road marking based on their balance between cost and performance longevity. Generally thermoplastic binder systems for thermoplastic markers are based on hydrocarbons manufactured from petroleum-based resins that provide heat stability and ideal processing characteristics or alkyd thermoplastics containing a naturally-occurring resin. Such coatings are also homogeneous dry mixes of binder resins, plasticizers, glass beads (or other optics), pigments, and fillers. Such types of markers usually exhibit increased durability, lasting at least two years, and retro-reflectivity.

Thermoplastic materials are majorly preferred to be used as road markings due to their advantages over paints and other marking methods. Thermoplastics have higher durability, high impact resistance, better visibility and are skid resistant compared to other materials. However, due to abrasion caused by vehicles and weather conditions, microplastic particles are introduced into the environment from these thermoplastic road markings, which end up in oceans, accounting for 7% of microplastics in the ocean. This has compelled a need for thermoplastic options for use in road-marking applications leading to less persistent microplastic being released into the biosphere.

Prior art discloses a road marking thermoplastic composition that has an organic base binder with homopolymers, or copolymers derived from vinylic, acrylic, or methacrylic monomers. Another discloses an aqueous road marking paint with bio-based polymerized hydroxyacid derivatives. Another discloses a hot-applied thermoplastic marking composition and utilization of large aggregates to improve its anti-skid performance. US2019055704A1 discloses a pelletized binder composition for road marking applications comprising thermoplastic binders. All these prior arts inherently release microplastics in the environment leading to hazardous effects. Until now the general approach for the reduction of microplastic introduced into the biosphere has been to increase the durability of the respective road marking.

The present disclosure provides a thermoplastic composition for road markings based on biodegradable polymers and preferably bio-based and/or biodegradable materials such as plant resin and natural wax so that it preferably introduces less to no toxic products and/or persistent, preferably biodegradable, microplastic into the biosphere, reducing aquatic toxicity, reproductive toxicity, carcinogenicity, genotoxicity, heavy metals, and halogenated compounds. The thermoplastic composition for road markings preferably adheres to the demand for sustainability in the road construction field while meeting the requirements and specification existing to thermoplastic road markings. It has been surprisingly found, that despite the thermoplastic polymer being biodegradable, the thermoplastic road marking composition according to the invention can meet the requirements and specification existing to thermoplastic road markings especially those relating to durability and wear or skid resistance.

In general, the present disclosure relates to thermoplastic road marking compositions based on biodegradable polymers and thermoplastic road markings comprising such compositions.

One embodiment of the present invention is a thermoplastic composition for use in road marking applications, comprising: a) at least one thermoplastic, biodegradable polymer, preferably according to OECD 301B b) resin and c) wax, which is preferably not toxic according to OECD 202.

One aspect of the present disclosure provides a thermoplastic composition for road marking applications, which may additionally include various additives such as thermostabilizing agent, plasticizer, UV stabilizer, UV absorber, pigments like titanium dioxide and reflective beads from recycled glass.

Another embodiment of the present invention is a thermoplastic composition for use in road marking applications, comprising: a) 5 wt % to 20 wt %, preferably 7 wt % to 15 wt %, more preferably 9 wt % to 12 wt % of the at least one thermoplastic, biodegradable polymer, b) 5 wt % to 20 wt %, preferably 10 wt % to 15 wt %, more preferably 11 wt % to 13 wt % of the resin, preferably biobased resin, c) 1 wt % to 10 wt %, preferably 2 wt % to 5 wt %, wax, preferably biodegradable wax, d) 0 wt % to 1 wt %, preferably 0.0001 wt % to 0.5 wt %, of a thermostabilizing agent, preferably octadecyl 3-(4'-hydroxy-3',5'-di-t-butylphenyl)propionate and e) 0 wt % to 10 wt %, preferably 1 wt % to 8 wt %, more preferably 2 wt % to 5 wt % of at least one plasticizer, preferably an optionally epoxidized vegetable oil based on the total amount of the thermoplastic composition.

Yet another embodiment of the present invention is a thermoplastic composition for use in road marking applications wherein at least one component, preferably at least components a), b), c) and/or d), are bio-based. More preferably, components b) and/or d) are biobased and most preferably components a), c) and/or d) are biodegradable. In particular preferably, resin and/or plasticizer are biobased and most preferably thermoplastic polymer, wax and/or plasticizer are biodegradable.

The thermoplastic composition according to the present invention comprises at least one thermoplastic, biodegradable polymer, resin, wax, and optionally, at least one thermostabilizing agent, at least one plasticizer, pigments, fillers and/or reflective beads. The combination of at least one thermoplastic, biodegradable polymer, resin and wax may be referred to as binder, preferably of the thermoplastic composition.

Preferably the thermoplastic composition does not contain water, more preferably the thermoplastic composition does not contain any solvents, such as water or alcohol.

The terms thermoplastic, polymer, resin and wax used herein have the same meaning as commonly understood by one of ordinary skill in the art to which this invention belongs. The advantage of a thermoplastic material or polymer is, that it can be melted and resolidified many times without appreciable change of properties. A wax may be an organic compound that characteristically comprises or substantially consists of long aliphatic alkyl chains, although aromatic compounds may also be present with melting points above about 40 °C. Waxes are insoluble in water but soluble in nonpolar organic solvents such as hexane, benzene and chloroform. Natural waxes may contain unsaturated bonds and include various functional groups such as fatty acids, primary and secondary alcohols, ketones, aldehydes and fatty acid esters. Synthetic waxes often consist of homologous series of long-chain aliphatic hydrocarbons (alkanes or paraffins) that lack functional groups.

The polymer component a) consists of at least one thermoplastic biodegradable polymer, wherein the polymer component a) also may be a blend or a copolymer of at least two thermoplastic biodegradable polymers. The at least one thermoplastic biodegradable polymer is preferably not toxic according to OECD 202.

According to one aspect of the present invention, the polymer component or the at least one biodegradable polymer is responsible for the stability of the composition itself, while the resin is responsible for forming a stable bond with the substrate. The thermal stabilizer ensures that the components are not excessively stressed and decomposed during heating. On the other hand, the wax lowers the viscosity in the melt and thus improves the processability. The plasticizer increases the flexibility of the thermoplastic and also reduces the viscosity in the melt.

If a material is biodegradable may be determined according to OECD 131B.

According to one aspect of the present invention, the thermoplastic biodegradable polymer in the biodegradable thermoplastic road-marking composition is selected from the group consisting of polybutylene succinate (PBS), polybutylene succinate adipate (PBSA), polyhydroxyalkanoates (PHA) such as poly-3-hydroxybutyrate (PHB), poly-3-hydroxyvalerate (PHV), and poly(3-hydroxybutyrate)-co-(3-hydroxyvalerate) (PHBV), polylactic acid (PLA), polyvinyl alcohol (PVA), polyethylene furanoate (PEF), polycaprolactone (PCL), polybutylene adipate terephthalate (PBAT), or copolymers, blends, or mixtures thereof; preferably polybutylene succinate (PBS) or polyhydroxyalkanoates (PHA). The biodegradable polymer for the application according to the invention should be especially UV-stable and heat resistant. Thus, the biodegradable polymer preferably is no polylactic acid but more preferably is selected from the group consisting of (PBS), polybutylene succinate adipate (PBSA), polyhydroxyalkanoates (PHA) such as poly-3-hydroxybutyrate (PHB), poly-3-hydroxyvalerate (PHV), and poly(3-hydroxybutyrate)-co-(3-hydroxyvalerate) (PHBV), polyvinyl alcohol (PVA), polyethylene furanoate (PEF), polycaprolactone (PCL), polybutylene adipate terephthalate (PBAT), or copolymers, blends, or mixtures thereof; most preferably polybutylene succinate (PBS) or polyhydroxyalkanoates (PHA). The polymer and the respective degradation products are preferably suitable for the biosphere and not toxic, preferably according to OECD 202. The biodegradable polymers in the thermoplastic composition preferably have a molecular weight (Mn) of from 10 000 g/mol to 1 000 000 g/mol, preferably from 45 000 g/mol to 800 000 g/mol, more preferably from 50 000 g/mol to 400 000 g/mol. The molecular weight is determined by gel permeation chromatography (GPC) with triple detection (combination of a Rayleigh light scattering detector with a viscosity detector and a refractive index detector) with hexafluoroisopropanol as eluent. In particular, the biodegradable polymers have a molecular weight distribution such that the biodegradable polymers always consist of a mixture of polymers with different chain length or molecular weight. Likewise, polymers with different molecular weights from each other can be used as biodegradable polymers.

The thermoplastic composition preferably comprises 5 wt % to 20 wt %, preferably 7 wt % to 15 wt %, more preferably 9 wt % to 12 wt % of the at least one biodegradable polymer, based on the total amount of the thermoplastic composition.

The thermoplastic biodegradable polymer in the thermoplastic road-marking composition preferably has a melting point of 100 °C to 200 °C, more preferably of 110 °C to 180 °C, determined according to DIN EN ISO 3146:2022-06.

The thermoplastic biodegradable polymer in the thermoplastic road-marking composition preferably has a melt-flow-rate of 5 to 50 g/10 min, more preferably 10 to 40 g/10 min, determined according to DIN EN ISO 1133-1:2022-10 at 190 °C and 2.16 kg.

The thermoplastic biodegradable polymer in the thermoplastic road-marking composition preferably has a softening point of 80 °C to 180 °C, more preferably of 100 °C to 160 °C, determined according to DIN EN ISO 4625-1:2020-11.

The resin in the thermoplastic road-marking composition is preferably a plant resin, more preferably a soli plant resin, more preferably from the group of turpentine, balsam, rosin or products of esterification of rosin, sandarac, mastic, maleic resin, or mixtures thereof, most preferably rosin or products of esterification of rosin such as maleic modified rosin esters (MMRE) or maleic resin or mixtures thereof.

The resin in the thermoplastic composition may be rosin resin, rosin ester, such as hydrogenated hydrocarbon rosin esters, acrylic rosin esters, disproportionation rosin esters, dibasic acid modified rosin esters, polymerized resin esters, phenolic modified rosin ester resins, and mixtures thereof or a mixture of maleic modified glycerol ester and pentaerythritol ester of rosin resins and derivatives such as rosin acids, maleic anhydride or fumaric acid or maleic modified rosin esters (MMRE) or mixtures thereof. Rosin acids, derived from trees as gum rosin, wood rosin, or tall oil rosin, are comprised of one or more component of the group consisting of abietic acid, neoabietic acid, dehydroabietic acid, levopimaric acid, pimaric acid, palustric acid, isopimaric acid, and sandarocopimaric acid. Rosin esters are comprised of one or more derivative obtained from the reaction of one or more rosin acids and one or more alcohol from the group of alcohols consisting of methanol, triethylene glycol, glycerol, and pentaerythritol. In one embodiment, the pelletized binder system comprises rosin ester having a softening point of between 95° C. and 120° C.

Suitable resins can be commercially purchased e.g. as Bremar SP 9470, Bremasin 1370, Bremasin 1380, Bremasin 1970, Erkamar 4085, Polymelt 101 or Sylvalite RE 100.

The thermoplastic composition preferably comprises 5 wt% to 20 wt%, more preferably 10 wt % to 15 wt %, most preferably 11 wt % to 13 wt % of the resin, preferably a plant resing, more preferably a solid plant resin, most preferably rosin or products of esterification of rosin such as maleic modified rosin esters (MMRE) or maleic resin or mixtures thereof, based on the total amount of the thermoplastic composition. The resin in the thermoplastic road-marking composition preferably has a melting point of 75 °C to 110 °C, determined according to DIN EN ISO 3146:2022-06. The resin preferably is colorless.

According to another aspect of the present invention, the wax in the thermoplastic road-marking composition may be a paraffin wax, a optionally oxidized synthetic wax or a natural wax. The wax is preferably selected from the group of paraffin wax or optionally oxidized synthetic wax.

The waxes can be any of vegetable (or natural) waxes, petroleum derived waxes, and synthetic waxes. Vegetable waxes used in thermoplastics are normally naturally occurring mixtures of long-chain aliphatic hydrocarbons, containing esters of fatty acids and alcohols. The fatty acids are comprised of one or more component of the group consisting of ricinoleic acid, oleic acid, linoleic acid, linolenic acid, stearic acid, palmitic acid, dihydroxy stearic acid, myristic acid, myristoleic acid, palmitoleic acid, sapeinic acid, elaidic acid, vaccenic acid, alpha-linolenic acid, arachidonic acid, eicosapentaenoic acid, erucic acid, docosahexaenoic acid, caprylic acid, capric acid, lauric acid, arachidic acid, behenic acid, lignoceric acid, and cerotic acid. The alcohols are comprised of one or more members selected from the group consisting of glycerol, ethanol, methanol, pentaerythritol, iso-propanol, isopropyl alcohol, butanol, dihydroxy butanol, or any other mono-functional or multi-functional alcohol a varying long-chain aliphatic hydrocarbon backbone.

Petroleum derived waxes are comprised of one or more member selected from the group consisting of saturated n-alkanes, iso-alkanes, napthenes, alkyl-substituted aromatic compounds, and napthene-substituted aromatic compounds, preferably paraffin wax.

Paraffins are generally understood to include macrocrystalline kerosenes (kerosene waxes) and microcrystalline kerosenes (microwaxes). The macrocrystalline kerosenes are obtained from the vacuum distillate fractions during their processing to lubricating oils. The microcrystalline kerosenes come from the residues of vacuum distillation and the sediments of paraffinic crude oils (precipitation kerosenes). The macrocrystalline kerosenes consist predominantly of n-paraffins, which additionally contain iso-paraffins, naphthenes and alkyl aromatics, depending on the degree of refining. The microcrystalline kerosenes consist of a mixture of hydrocarbons that are predominantly solid at room temperature. Unlike the macrocrystalline kerosenes, the iso-paraffins and naphtenic kerosenes are predominant. The microcrystalline kerosenes are characterized by the presence of crystallization-inhibiting, highly branched iso-paraffins and naphthenes. For the purposes of the invention, macrocrystalline kerosenes with a melting point of 50 to 130 °C, preferably 60 to 100°C, more preferably 60 to 85°C, are particularly suitable.

Synthetic waxes can be polyethylene, Fischer-Tropsch waxes, chemically modified waxes, or amide modified waxes. Polyethylene waxes generally have the chemical formula (C₂H₄)ₙH₂ and are comprised, based on branching and chemical structure, of one or more component of the group consisting of ultra-high-molecular-weight polyethylene (UHMWPE), high-density polyethylene (HDPE), cross-linked polyethylene (PEX or XLPE), medium-density polyethylene (HDPE), linear low-density polyethylene (LLDPE), low-density polyethylene (LDPE), very-low-density polyethylene (VLDPE), and copolymers. Fischer-Tropsch waxes generally have the chemical formula (CₙH₍₂ₙ₊₂₎).

Chemically modified waxes are converted from non-polar to polar molecules by the incorporation of a functional chemical group comprising one or more component consisting of a hydroxyl group, a carboxyl group, a salt, an ester group, and an acid group. Amide modified waxes are chemically modified waxes that have amide functional molecules grafted to the polyethylene molecule to modify flexibility, adhesion, or system compatibility of the wax.

Polyethylene waxes are low molecular weight polymers which are essentially composed of ethylene units and are partially or highly crystalline. The polymer chains from the ethylene units are elongated molecules that may be branched, with shorter side chains predominating. In general, polyethylene waxes are prepared by direct polymerization of the ethylene, optionally using regulators, or by depolymerization of polyethylenes with higher molecular weights. According to the invention, the polyethylene waxes have an average molecular weight Mₙ (number average) of from 200 to 700, preferably from 400 to 600, and preferably a molecular weight distribution (polydispersity) Mw/Mn of less than 2, preferably from 1 to 1.5. The melting point is generally in the range of from 70 to 150°C, preferably from 80 to 100°C.

Suitable natural waxes are for example beeswax, spermaceti, lanolin, carnauba wax, jojoba oil, candelilla wax or ouricury wax, or modified natural wax, or mixtures thereof. Suitable waxes can be commercially purchased e.g. as beeswax, Biomer 70, Biomer 88, Biomer 110, mju:wax 7700 or mju:wax 7800 M.

The thermoplastic composition preferably comprises 1 wt % to 10 wt %, more preferably 2 wt % to 5 wt % of the wax, preferably paraffin or optionally oxidized synthetic wax, more preferably biodegradable wax according to OECD 301B, based on the total amount of the thermoplastic composition. The wax in the thermoplastic road-marking composition preferably has a melting point of 80 °C to 120 °C determined according to DIN EN ISO 3146:2022-06. The wax preferably is colorless. The wax is preferably not toxic according to OECD 202.

One embodiment of present invention discloses a thermoplastic composition for use in road marking applications, comprising: a) at least one thermoplastic, biodegradable polymer, b) resin, c) wax and additionally d) thermal stabilizer and e) plasticizer.

The thermostabilizing agent in the thermoplastic road-marking composition may be selected from the group consisting of phenolic thermostabilizers, such as n-octadecyl 3-(4'-hydroxy-3',5'-di-t-butylphenyl) propionate, organic phosphites, aromatic amines, metal salts of metals chosen from the group consisting of elements from Group IB, IIB, III and IV of the Periodic Table and alkali and alkali earth metal halides, and combinations thereof, more preferably n-octadecyl 3-(4'-hydroxy-3',5'-di-t-butylphenyl) propionate.

The thermoplastic composition preferably comprises 0 wt % to 1 wt %, more preferably 0.0001 wt % to 0.5 wt % of the thermostabilizing agent, preferably octadecyl 3-(4'-hydroxy-3,5'-di-t-butylphenyl)propionate based on the total amount of the thermoplastic composition.

The thermoplastic composition may comprise at least one plasticizer selected from the group of vegetable oils, process oils, mineral oils, phthalates and mixtures thereof.

Process oils are comprised of one or more components of the group consisting of paraffinic oils, naphthenic oils, and aromatic oils. Paraffinic oils are saturated carbon backbones, naphthenic oils have polyunsaturated carbon structure with little aromatic content, and aromatic oils have cyclic carbon unsaturation resulting aromatic classification. Phthalates are comprised of one or more components from the group consisting of dimethyl phthalate, diethyl phthalate, diallyl phthalate, di-n-propyl phthalate, di-n-butyl phthalate, diisobutyl phthalate, butyl cyclohexyl phthalate, di-n-pentyl phthalate, dicyclohexyl phthalate, butyl benzyl phthalate, di-n-hexyl phthalate, diisohexyl phthalate, diisoheptyl phthalate, butyl decyl phthalate, butyl(2-ethylhexyl) phthalate, di(n-octyl) phthalate, diisooctyl phthalate, n-octyl n-decyl phthalate, diisononly phthalate, di(2-prpoylheptyl) phthalate, diisodecyl phthalate, diundecyl phthalate, diisoundecyl phthalate, ditridecyl phthalate, and diisotridecyl phthalate.

Vegetable oils, called triglycerides because they are the resultant reaction of fatty acids with glycerol, and synthetic alkyd oils are made of fatty acid esters of varying composition. The fatty acids found in their structure are comprised of one or more components of the group consisting of ricinoleic acid, oleic acid, linoleic acid, linolenic acid, stearic acid, palmitic acid, dihydroxy stearic acid, myristic acid, myristoleic acid, palmitoleic acid, sapeinic acid, elaidic acid, vaccenic acid, alpha-linolenic acid, arachidonic acid, eicosapentaenoic acid, erucic acid, docosahexaenoic acid, caprylic acid, capric acid, lauric acid, arachidic acid, behenic acid, lignoceric acid, and cerotic acid.

Phthalates are comprised of one or more components from the group consisting of dimethyl phthalate, diethyl phthalate, diallyl phthalate, di-n-propyl phthalate, di-n-butyl phthalate, diisobutyl phthalate, butyl cyclohexyl phthalate, di-n-pentyl phthalate, dicyclohexyl phthalate, butyl benzyl phthalate, di-n-hexyl phthalate, diisohexyl phthalate, diisoheptyl phthalate, butyl decyl phthalate, butyl(2-ethylhexyl) phthalate, di(n-octyl) phthalate, diisooctyl phthalate, n-octyl n-decyl phthalate, diisononly phthalate, di(2-prpoylheptyl) phthalate, diisodecyl phthalate, diundecyl phthalate, diisoundecyl phthalate, ditridecyl phthalate, and diisotridecyl phthalate.

The plasticizer in the thermoplastic road marking is preferably an optionally epoxidized vegetable oil, more preferably selected from the group of Coconut oil, Corn oil, Cottonseed oil, Canola oil, Olive oil, Palm oil, Peanut oil, Safflower oil, Sesame oil, Soybean oil, Sunflower oil, Hazelnut oil, Almond oil, Cashew oil, Macadamia oil, Pecan oil, Pistachio oil, Walnut oil, Acai oil, grape seed oil, Blackcurrant seed oil, Borage seed oil, Evening primrose oil, carob pod oil, Amaranth oil, Apricot oil, Argan oil, Artichoke oil, Avocado oil, Babassu oil, Ben oil, extracted from the seeds of the Moringa oleifera, Borneo tallow nut oil, extracted from the fruit of species of genus Shorea. Buffalo gourd oil, from the seeds of the Cucurbita foetidissima, Coriander seed oil, False flax oil made of the seeds of Camelina sativa, Hemp oil, Kapok seed oil, Lallemantia oil, from the seeds of Lallemantia iberica, Meadowfoam seed oil, Mustard oil, Okra seed oil ( Hibiscus seed oil), Perilla seed oil, Pequi oil, extracted from the seeds of Caryocar brasiliensi,. Pine nut oil,. Poppyseed oil, Prune kernel oil, Pumpkin seed oil, Quinoa oil, Ramtil oil, pressed from the seeds of the one of several species of genus Guizotia abyssinica (Niger pea), Rice bran oil, Tea oil (Camellia oil), Thistle oil, Wheat germ oil, Algae oil, Jojoba oil, Apple seed oil, Castor oil.

The plasticizer in the thermoplastic road-marking composition may alternatively be selected from known plasticizers such as di(2- ethylhexyl) terephthalate (DOTP), butylbenzyl phthalate (BBP), dioctyl adipate (DOA), diheptylnonyl adipate (DnHNA), Di(2-ethylhexyl) adipate (DEHA), diisononyl adipate (DINA), diisodecyl adipate (DIDA), triheptylnonyl trimellitate (TnHNTM), tri(2-ethylhexyl) trimellitate (TOTM), triisononyl trimellitate (TINTM), di(2-ethylhexyl) sebacate (DOS), di(2, -ethylhexyl) azelate (DOZ) or mixtures thereof. More preferably the plasticizer is an optionally epoxidized vegetable oil, most preferably castor oil, peanut oil and/or epoxidized soy bean oil (ESBO).

The thermoplastic composition preferably comprises 0 wt % to 10 wt %, more preferably 1 wt % to 8 wt %, most preferably 2 wt % to 5 wt % of the plasticizer, preferably optionally epoxidized vegetable oil, most preferably castor oil, peanut oil and/or epoxidized soy bean oil (ESBO), based on the total amount of the thermoplastic composition.

In addition to the above disclosed composition, the thermoplastic road-marking composition may preferably comprise additionally a mixture of glass beads, pigments, quartz sand, quartz flour, and/or a UV stabilizer. The specific mixture ensures the functionality of thermoplastic and has a significant influence on the lighting values and resistance to mechanical stress.

The pigments can be of different colored materials. The pigment for white materials is predominately Type II rutile titanium dioxide. The pigment for yellow materials is an organic based yellow pigment which can be a combination of yellow and red or orange pigments designed to withstand high temperatures and provide UV resistance and weatherability. The pigment can be Rutile Type II titanium dioxide with a minimum purity of 92% for white materials, and a combination of titanium dioxide and organic or other heavy metals free yellow pigments for yellow materials.

The thermoplastic composition may additionally comprise: f) 0 wt % to 0.5 wt %, preferably 0.0001 wt % to < 0.5 wt % of UV stabilizer, preferably based on an amino ether functionality (HALS), g) 0 wt % to 0.5 wt %, preferably 0.0001 wt % to < 0.5 wt % of UV absorber, preferably cinnamic acid derivatives such as diethyl 2-(4-hydroxy-3-methoxybenzylidene)malonate or dimethyl 2-(4- hydroxybenzyliden)malonate, h) 0 wt % to 75 wt %, preferably 15 wt % to 65 wt %, more preferably 30 wt % to 40 wt % of a filler, preferably quartz sand and/or quartz powder, i) 0 wt % to 10 wt %, preferably 7 wt % to 8 wt % of pigments, preferably titanium dioxide, and/or j) 0 wt % to 40 wt %, preferably 15 wt % to 30 wt %, more preferably 20 wt % to 25 wt % reflective beads, preferably from recycled material, more preferably glass beads, based on the total amount of the thermoplastic composition. In one embodiment the thermoplastic composition comprises as filler a mixture of quartz sand and quartz powder, wherein the thermoplastic composition comprises 0 wt % to 15 wt %, preferably 8 wt % to 13 wt % quartz powder and 0 wt % to 60 wt %, preferably 15 wt % to 50 wt %, more preferably 30 wt % to 40 wt % of quartz sand based on the total amount of the thermoplastic composition. The quartz sand preferably has a particle size of 0.1 to 2.2 mm more preferably to 1 mm, most preferably to 0.5 mm.

According to another aspect of the present invention the thermoplastic composition disclosed is used for the road marking applications. The composition beneficially has a wear resistance of ≥ 90 under the conditions of the BASt wear simulator and according to DIN EN 13197-AG-2012 after 1 million roll-overs, preferably corresponding to class P5 to section 5.2 of ZTV M 13, more preferably after 2 million roll-overs, preferably corresponding to class P6 to section 5.2 of ZTV M 13, most preferably after 4 million roll-overs, preferably corresponding to class P7 to section 5.2 of ZTV M 13.

According to another aspect of the present invention in the thermoplastic composition, at least one component, preferably at least components a), b) and/or c), more preferably component a) and/or b) are at least partially, more preferably to at least 90 wt%, bio-based according to ASTM D6866-04.

The thermoplastic road marking composition according to the present invention, is preferably provided such that microplastic introduced into the environment by abrasion from the thermoplastic road marking is biodegradable and/or wherein the decomposition products are non-toxic, preferably according to OECD 202. Preferably, the thermoplastic composition is biodegradable, preferably according to OECD 301B.

In a preferred embodiment the thermoplastic composition comprises
- 5 wt % to 20 wt %, preferably 7 wt % to 15 wt %, more preferably 9 wt % to 12 wt % of a thermoplastic biodegradable polymer or polymer blend according to OECD 301B with a melting point of 100 °C to 200 °C, preferably of 110 °C to 180 °C, determined according to DIN EN ISO 3146:2022-06 and/or a melt-flow-rate of 5 to 50 g/10, preferably 10 to 40 g/10 min, determined according to DIN EN ISO 1133-1:2022-10 at 190 °C and 2.16 kg and/or a softening point of 80 °C to 180 °C, preferably of 100 °C to 160 °C, determined according to DIN EN ISO 4625-1:2020-11, preferably polybutylene succinate (PBS) or polyhydroxy alkanoates (PHA),
- 5 wt % to 20 wt %, preferably 10 wt % to 15 wt %, more preferably 11 wt % to 13 wt % of the resin with a melting point, determined according to DIN EN ISO 3146:2022-06 of 75 °C to 110 °C, preferably rosin or maleic resin,
- 1 wt % to 10 wt %, preferably 2 wt % to 5 wt %, wax with a melting point of 80 °C to 120 °C, determined according to DIN EN ISO 3146:2022-06, preferably paraffin or natural wax, more preferably a biodegradable wax preferably according to DIN EN 13432:2007-10,
- 0 wt % to 1 wt %, preferably 0.0001 wt % to 0.5 wt %, of thermostabilizing agent, preferably octadecyl 3-(4'-hydroxy-3',5'-di-t-butylphenyl)propionate and
- 0 wt % to 10 wt %, preferably 1 wt % to 8 wt %, more preferably 2 wt % to 5 wt % of at least one plasticizer, preferably castor oil or epoxidized soya bean oil (ESBO),
based on the total amount of the thermoplastic composition.

The thermoplastic composition according to this embodiment may additionally comprise
- 0 wt % to 0.5 wt %, preferably 0.0001 wt % to < 0.5 wt % of UV stabilizer, preferably based on an amino ether functionality (HALS),
- 0 wt % to 0.5 wt %, preferably 0.0001 wt % to < 0.5 wt % of UV absorber, preferably cinnamic acid derivatives such as diethyl 2-(4-hydroxy-3-methoxybenzylidene)malonate or dimethyl-2-(4- hydroxybenzyliden)malonate,
- 0 wt % to 60 wt %, preferably 15 wt % to 50 wt %, more preferably 30 wt % to 40 wt % of a binder, preferably quartz sand, preferably with a particle size of 0.1-0.4 mm,
- 0 wt % to 10 wt %, preferably 7 wt % to 8 wt % of pigments, preferably titanium dioxide,
- 0 wt % to 75 wt %, preferably 15 wt % to 65 wt %, more preferably 35 wt % to 55 wt % of a filler, preferably quartz sand and/or quartz powder
- 0 wt % to 40 wt %, preferably 15 wt % to 30 wt %, more preferably 20 wt % to 25 wt % reflective beads, preferably from recycled material, more preferably glass beads,
based on the total amount of the thermoplastic composition, preferably wherein the thermoplastic composition has a wear resistance of ≥ 90 under the conditions of the BASt wear simulator and according to DIN EN 13197-AG-2012 after 1 million roll-overs, preferably corresponding to class P5 to section 5.2 of ZTV M 13, more preferably after 2 million roll-overs, preferably corresponding to class P6 to section 5.2 of ZTV M 13, most preferably after 4 million roll-overs, preferably corresponding to class P7 to section 5.2 of ZTV M 13.

Another object of the invention is a thermoplastic road marking comprising a thermoplastic composition according to the present invention.

The road marking may be produced by usual methods known to a person skilled in the art e.g.by pushing the thermoplastic composition according to the invention through a draw shoe that rides directly on the road surface. A continuous line is formed by a three-sided die with a control gate set to a predetermined thickness. The road marking may also be produced with a "gun" that travels just above the road surface. The material is forced through the die and flows from there onto the roadway.

In another method, air and hot thermoplastic are combined under pressure and applied to the roadway through a nozzle. The main advantage is that marking can be done at higher speeds.

The thermoplastic composition for the production of a thermoplastic road marking may be provided as a shaped article, such as pellets or blocks.

The thermoplastic road marking may be provided as prefabricated road marking comprising, preferably consisting of, the thermoplastic composition, that can be placed on top on a surface, preferably a street or pavement, and applied by heating the thermoplastic road marking.

The thermoplastic road marking may be produced as one or more than one layer, preferably one or two layers, more preferably on layer, wherein at least one layer, preferably all layers comprise or preferably consist of the thermoplastic composition according to the invention. Most preferably the thermoplastic road marking consists of the thermoplastic composition according to the invention. In one embodiment, the thermoplastic road marking comprises preferably consists of, one layer comprising, preferably consisting of, a thermoplastic composition according to the invention.

Post application the thermoplastic road marking may be treated with reflective beads, preferably by post scattering with reflective beads and/or skid resistance agent.

The thermoplastic road marking may have an alternating raised and recessed profile that provides improved retroreflection in wet conditions. If the profile is sufficiently deep, an acoustic and haptic effect can be created when driving over it.

Road markings are traffic signs within the meaning of the Road Traffic Act (StVO). They are used on roads either in white or colored, as permanent markings or temporary markings. In addition, they must be clearly recognizable to ensure continuous visual guidance for road users and be able to withstand the highest loads. In order to meet these requirements, marking systems must meet prescribed minimum requirements in terms of visibility, grip, and wear resistance.

In the present invention, suitability tests are used to determine whether a marking system meets the minimum requirements prescribed for Germany in accordance with ZTV M and TLM. During the suitability test, the marking systems applied to special test specimens are rolled over up to four million times - depending on the traffic volume, this corresponds to a service life of up to four years in practice, and the traffic-related properties and wear resistance are determined in defined cycles.

If a marking system meets the minimum requirements in terms of traffic-related properties and wear resistance, as well as chemical and physical composition, this marking system is approved for use on federal trunk roads. Approved marking systems are published in a database and in simplified overview lists by the BASt. The suitability tests are carried out separately for the various marking materials.

Requirements for Road markings and testing methods were measured according to DIN EN 1436 AG-2018.

Biodegradability was measured according to OECD 301B.

Melting point was measured according to DIN EN ISO 3146:2022-06.

Melt-flow-rate was measured according to DIN EN ISO 1133-1:2022-10 at 190 °C and 2.16 kg.

Softening point was measured according to DIN EN ISO 4625-1:2020-11

### Examples:

**Table 1: Example compositions**

| **A** | **B** | **Weight** |
|---|---|---|
| Polyhydroxyalkanoate | Polybutyl succinate | 9.5 |
| Internally plasticized maleic resin based on renewable raw | Internally plasticized maleic resin based on renewable raw | 12 |
| n-octadecyl3-(4'-hydroxy-3',5'-di-t-butylphenyl)propionate | n-octadecyl3-(4'-hydroxy-3',5'-di-t-butylphenyl)propionate | 0.2 |
| Castor oil | Castor oil | 3 |
| Paraffine wax | Paraffine wax | 3 |
| HALS based on amino ether | HALS based on amino ether | 0.15 |
| diethyl 2-(4-hydroxy-3-methoxybenzylidene)malonate | diethyl 2-(4-hydroxy-3-methoxybenzylidene)malonate | 0.15 |
| Quartz sand 0,1 - 0,4 mm | Quartz sand 0,1 - 0,4 mm | 32 |
| Titanium dioxide | Titanium dioxide | 7 |
| Quartz flour | Quartz flour | 9.5 |
| Recycled reflective beads material | Recycled reflective beads material | 23.5 |

**Table 2: Marking systems and traffic classes**

| **Marking systems** | **Traffic class by DIN EN 13 197** | **Rollovers (in millions)** |
|---|---|---|
| Type I marking systems for short term | P2 ¹⁾ | 0.1 |
| Assignment (< 14 days) | | |
| Type I color marking systems | P4 / PS | 0.5 / 1.0 |
| Type II color marking systems | PS¹⁾ / P6 | 1.0 / 2.0 |
| Other marking systems | PS ¹⁾ / P6 / P7 | 1.0 / 2.0 / 4.0 |
| All other systems | PS ¹⁾ / P6 / P7 | 1.0 / 2.0 / 4.0 |
| ¹⁾ Only for temporary markings | | |

**Table 3: Traffic classes according to Table 6 of the ZTV M 13**

| **Traffic class** | **Number of wheel overrides** |
|---|---|
| **P2** | 100 000 |
| **P4** | 500 000 |
| **P5** | 1 000 000 |
| **P6** | 2 000 000 |
| **P7** | 4 000 000 |

**Table 4: Traffic classes in the BASt aptitude test according to table 7 of ZTV M 13**

| **Marking systems** | **Final** | **Temporary** |
|---|---|---|
| Type 1 marking systems for short-term use(<14 days) | | P 2 |
| Colors Type I | P 4 and P 5 | P 4 and P 5 |
| Colors Type II | P6 | P 5 and P 6 |
| Other spraying markings | P 6 and P 7 | P 5 and P 7 |
| All other systems | P 6 and P 7 | P 5 and P 7 |

## Claims

1. A thermoplastic composition for use in road marking applications, comprising:
A) at least one thermoplastic, biodegradable polymer, preferably according to OECD 301B
B) resin, and
C) wax.

2. Thermoplastic composition according to claim 1, wherein the at least one biodegradable polymer has a melting point of 100 °C to 200 °C, preferably of 110 °C to 180 °C, determined according to DIN EN ISO 3146:2022-06.

3. Thermoplastic composition according to claims 1 or 2, wherein the at least one biodegradable polymer has a melt-flow-rate of 5 to 50 g/10, preferably 10 to 40 g/10 min, determined according to DIN EN ISO 1133-1:2022-10 at 190 °C and 2.16 kg.

4. Thermoplastic composition according to any of claims 1 to 3, wherein the at least one biodegradable polymer has a softening point of 80 °C to 180 °C, preferably of 100 °C to 160 °C, determined according to DIN EN ISO 4625-1:2020-11

5. Thermoplastic composition according any of the preceding claims, wherein the composition comprises 5 wt % to 20 wt %, preferably 7 wt % to 15 wt %, more preferably 9 wt % to 12 wt % of the at least one biodegradable polymer, based on the total amount of the thermoplastic composition.

6. Thermoplastic composition according to any one of the preceding claims 1 to 5, wherein the thermoplastic, biodegradable polymer is selected from the group consisting of polybutylene succinate (PBS), polybutylene succinate adipate (PBSA), polyhydroxy alkanoates (PHA), such as poly-3-hydroxybutyrate (PHB), poly-3-hydroxyvalerate (PHV) and poly(3-hydroxybutyrate)-co-(3-hydroxyvalerate) (PHBV), polylactic acid (PLA), polyvinyl alcohol (PVA), polyethylene furanoate (PEF), polycaprolactone (PCL), polybutylene adipate terephthalate (PBAT) or copolymers, blends or mixtures thereof optionally with starch, preferably polybutylene succinate (PBS) or polyhydroxy alkanoates (PHA).

7. Thermoplastic composition according to any one of the preceding claims 1 to 6, wherein the resin is a solid plant resin, such as rosin, and is preferably selected from rosin or products of esterification of rosin such as maleic modified rosin esters (MMRE) or maleic resin or mixtures thereof, more preferably with a melting point, determined according to DIN EN ISO 3146:2022-06 of 75 °C to 110 °C, most.

8. Thermoplastic composition according to any one of the preceding claims 1 to 7, wherein the wax is a petroleum derived wax, preferably paraffin wax, synthetic wax, preferably optionally oxidized polyethylene wax or natural wax, preferably selected from the group of beeswax, spermaceti, lanolin, carnauba wax, jojoba oil, candelilla wax or ouricury wax, or mixtures thereof, more preferably with a melting point of 80 °C to 120 °C, determined according to DIN EN ISO 3146:2022-06, most preferably paraffin wax.

9. Thermoplastic composition according to any one of the preceding claims, additionally comprising
D) at least one thermostabilizing agent, preferably selected from the group consisting of phenolic thermostabilizers, such as n-octadecyl 3-(4'-hydroxy-3',5'-di-t-butylphenyl)propionate, organic phosphites, aromatic amines, metal salts of metals chosen from the group consisting of elements from Group IB, IIB, III and IV of the Periodic Table and alkali and alkali earth metal halides, and combinations thereof, more preferably n-octadecyl 3-(4'-hydroxy-3',5'-di-t-butylphenyl)propionate.

10. Thermoplastic composition according to any one of the preceding claims, additionally comprising
E) at least one plasticizer, preferably an optionally epoxidized vegetable oil, more preferably selected from the group consisting of castor oil, epoxidized soya bean oil (ESBO), peanut oil or mixtures thereof.

11. Thermoplastic composition according to any one of the preceding claims 1 to 10, wherein the composition comprises:
A) 5 wt % to 20 wt %, preferably 7 wt % to 15 wt %, more preferably 9 wt % to 12 wt % of the at least one thermoplastic, biodegradable polymer,
B) 5 wt % to 20 wt %, preferably 10 wt % to 15 wt %, more preferably 11 wt % to 13 wt % of the resin, preferably maleic modified rosin esters (MMRE),
C) 1 wt % to 10 wt %, preferably 2 wt % to 5 wt %, wax, preferably paraffine wax or an optionally oxidized polyethylene wax, preferably which is biodegradable ,
D) 0 wt % to 1 wt %, preferably 0.0001 wt % to 0.5 wt %, of thermostabilizing agent, preferably octadecyl 3-(4'-hydroxy-3',5'-di-t-butylphenyl)propionate and
E) 0 wt % to 10 wt %, preferably 1 wt % to 8 wt %, more preferably 2 wt % to 5 wt % of at least one plasticizer, preferably an optionally epoxidized vegetable oil, more preferably castor oil, peanut oil or epoxidized soya bean oil (ESBO),
based on the total amount of the thermoplastic composition.

12. Thermoplastic composition according to any one of the preceding claims 1 to 11, additionally comprising
F) 0 wt % to 0.5 wt %, preferably 0.0001 wt % to < 0.5 wt % of UV stabilizer, preferably based on an amino ether functionality (HALS),
G) 0 wt % to 0.5 wt %, preferably 0.0001 wt % to < 0.5 wt % of UV absorber, preferably cinnamic acid derivatives, more preferably diethyl 2-(4-hydroxy-3-methoxybenzylidene)malonate or dimethyl-2-(4- hydroxybenzyliden)malonate,
H) 0 wt % to 75 wt %, preferably 15 wt % to 65 wt %, more preferably 35 wt % to 55 wt % of a filler, preferably quartz sand and/or quartz powder
I) 0 wt % to 10 wt %, preferably 7 wt % to 8 wt % of pigments, preferably titanium dioxide,
J) 0 wt % to 40 wt %, preferably 15 wt % to 30 wt %, more preferably 20 wt % to 25 wt % reflective beads, preferably from recycled material, more preferably glass beads,
based on the total amount of the thermoplastic composition.

13. Thermoplastic composition according to claim 12, wherein the thermoplastic composition has a wear resistance of ≥ 90 under the conditions of the BASt wear simulator and according to DIN EN 13197-AG-2012 after 1 million roll-overs, preferably corresponding to class P5 to section 5.2 of ZTV M 13, more preferably after 2 million roll-overs, preferably corresponding to class P6 to section 5.2 of ZTV M 13, most preferably after 4 million roll-overs, preferably corresponding to class P7 to section 5.2 of ZTV M 13.

14. Use of a thermoplastic composition according to any one of the preceding claims 1 to 13, for road markings, preferably thermoplastic road markings.

15. A thermoplastic road marking comprising a thermoplastic composition according to any one of preceding claims 1 to 13, preferably wherein microplastic introduced into the environment by abrasion from the thermoplastic road marking is biodegradable, preferably according to OECD 301B and/or wherein the decomposition products are non-toxic, preferably according to OECD 202.
